# EUROPÄISCHE PATENTANMELDUNG

(11) **EP 1 925 360 A1**
(43) Veröffentlichungstag der Anmeldung: **28.05.2008**
(21) Anmeldenummer: 07021879.7
(22) Anmeldetag: 12.11.2007
(51) Int. Cl.: B01J 19/26, B01J 3/08

(54) **Verfahren und Vorrichtung zur Partikelerzeugung**

(30) Priorität: 23.11.2006 DE 102006055703
(71) Anmelder: Lachenmeier, Walter, 53757 St. Augustin (DE); Olivier, Herbert, 52072 Aachen (DE); Nirschl, Herman, 76275 Ettlingen (DE); Schaber, Karlheinz, 76316 Malsch (DE); Schröder, Wolfgang, 52134 Herzogenrath (DE); Schulz, Christof, 50672 Köln (DE); Weigand, Bernhard, 70794 Filderstadt (DE); Deutsches Zentrum für Luft- und Raumfahrt e.V., 51147 Köln (DE)
(72) Erfinder: Gülhan, Ali, Dr.-Ing., 53757 St. Augustin (DE); Lachenmeier, Walter, Dr.-Ing., 53757 St. Augustin (DE); Olivier, Herbert, Prof.Dr.-Ing., 52072 Aachen (DE); Nirschl, Hermann, Prof.Dr.-Ing., 76275 Ettlingen (DE); Schaber, Karlheinz, Prof.Dr.-Ing., 76316 Malsch (DE); Schröder, Wolfgang, Prof.Dr.-Ing., 52134 Herzogenrath (DE); Schulz, Christof, Prof.Dr.rer..nat., 50672 Köln (DE); Weigand, Bernhard, Prof.Dr.-Ing., 70794 Filderstadt (DE)
(74) Vertreter: Wolf, Michael

(57) **Zusammenfassung**

Die Erfindung betrifft ein Verfahren zur Partikelerzeugung, bei dem in einer ersten Stufe ein Gasstrom bereitgestellt wird, bei dem in einer in Strömungsrichtung gesehen nachfolgenden zweiten Stufe der Gasstrom von Unterschall- auf Überschallgeschwindigkeit beschleunigt wird, bei dem dem Gasstrom spätestens in der zweiten Stufe mindestens ein Prekursor zugeführt wird, bei dem in einer in Strömungsrichtung gesehen nachfolgenden dritten Stufe der Gasstrom durch einen Stoß oder ein Stoßsystemabgebremst wird, bei dem eine durch den Stoß in der dritten Stufe induzierte Temperaturerhöhung eine Gasphasenreaktion am Precursor auslöst, und bei dem in einer in Strömungsrichtung gesehen nachfolgenden vierten Stufe die Gasphasenreaktion durch eine Temperaturabsenkung beendet wird. Ferner betrifft die Erfindung eine Vorrichtung zur Durchführung des Verfahrens.

## Beschreibung

Die Erfindung betrifft ein Verfahren zur Partikelerzeugung, bei dem in einer ersten Stufe ein Gasstrom bereitgestellt wird, bei dem in einer in Strömungsrichtung gesehen nachfolgenden zweiten Stufe der Gasstrom von Unterschall- auf Überschallgeschwindigkeit beschleunigt wird und bei dem in einer in Strömungsrichtung gesehen nachfolgenden dritten Stufe der Gasstrom durch einen (senkrechten oder schrägen) Stoß bzw. ein sogenanntes Stoßsystem von Überschall- auf wahlweise Unterschallgeschwindigkeit oder Überschallgeschwindigkeit mit kleinerer Mach-Zahl abgebremst wird. Die Erfindung betrifft ferner eine Vorrichtung zur Durchführung des Verfahrens gemäß dem Oberbegriff des Patentanspruchs 6.

Ein Verfahren und eine Vorrichtung der eingangs genannten Art sind nach der DE 101 00 867 A1 bekannt. Nach dieser Lösung ist ein mit Überschallgeschwindigkeit strömendes Gas (Fluid) vorgesehen, in dem Eingangspartikel suspendiert sind und das so geführt wird, dass in dem Gas ein Verdichtungsstoß auftritt und die Eingangspartikel (zur Erzeugung eines Aerosols) beim Durchqueren des Verdichtungsstoßes in kleinere Ausgangspartikel zerlegt werden. Mit anderen Worten ausgedrückt, wird der hohe Druckgradient innerhalb des Verdichtungsstoßes genutzt, um die suspendierten Eingangspartikel gewissermaßen mechanisch zu zerreißen. Der Begriff "suspendiert" bzw. "Suspension" verdeutlicht dabei, dass ein heterogenes Stoffgemisch aus einem Fluid (hier: gasförmig) und einem darin fein verteilten Zusatzstoff zur Erzeugung der Ausgangspartikel verwendet wird. Der Zusatzstoff ist dabei entweder flüssig (tropfenförmig) oder fest, wobei ein Ausgangsdurchmesser der Partikel von beispielsweise 50 µm zugrundegelegt ist. Durch den Stoß werden die Ausgangspartikel auf etwa ein Zehntel ihrer ursprünglichen Größe zerkleinert (minimal etwa 3 µm [entspricht 3000 nm]).

Die Partikelgröße zugrundelegend, betrifft die vorliegende Erfindung die Erzeugung von Partikeln der Größenordnung 1 bis 500 nm, mithin also sogenannte Nanopartikel, die sich mit dem in der DE 101 00 867 A1 beschriebenen, eher strömungsmechanische Aspekte betreffenden Verfahren nicht erzeugen lassen. Insoweit weist dieses Verfahren zwar teilweise Gemeinsamkeiten mit der Erfindung auf, betrifft tatsächlich aber völlig andere physikalisch-chemische Mechanismen und ein völlig anderes Einsatzgebiet.

Bei den bekannten, industriell eingesetzten, kontinuierlich laufenden Verfahren zur Herstellung von Nanopartikeln (zum Beispiel Gasphasenprozesse wie Flammen- und Heißwandreaktionen in entsprechenden Reaktoren oder auch die sogenannte Spray-Pyrolyse) besteht das Problem, dass die sich ergebenden nanoskaligen Partikel nur eingeschränkt genutzt werden können, da die die Partikel enthaltenden Produkte aufgrund ihrer Morphologie und der Bildung sogenannter "harter Agglomerate" zum Beispiel zu mangelnder Transparenz, hoher Viskosität oder Sedimentation neigen.

Da Nanopartikel zum Beispiel als Füllstoff in Kunststoffen, Beschichtungen oder Lacken zu neuartigen Materialkompositen führen, die sich beispielsweise durch verbesserte Härte, Reißfestigkeit, Abrasionsbeständigkeit und thermische Stabilität auszeichnen, mithin vielfältig einsetzbar sind, besteht die Aufgabe der Erfindung darin, ein Verfahren zur Partikelerzeugung und eine entsprechende Vorrichtung bereitzustellen, bei dem bzw. mit der nicht- oder nur gering agglomerierte Nanopartikel mit genau vorab definierter Größe (Größenordnung zwischen 1 und 500 nm) zuverlässig und im großen Umfang erzeugbar sind.

Diese Aufgabe ist mit einem Verfahren der eingangs genannten Art dadurch gelöst, dass dem Gasstrom spätestens in der zweiten Stufe mindestens ein Prekursor zugeführt wird, dass eine durch den Stoß in der dritten Stufe induzierte Temperaturerhöhung eine Gasphasenreaktion am Prekursor unter definierten Bedingungen zündet, und dass in einer in Strömungsrichtung gesehen nachfolgenden vierten Stufe zur Erzeugung der Nanopartikeln die Gasphasenreaktion durch eine ebenfalls definierte Temperaturabsenkung beendet wird (siehe Merkmale c, e und f), so dass Partikel genau definierter Größe entstehen. Vorrichtungsmäßig wird die Aufgabe durch die im Kennzeichen des Patentanspruchs 6 aufgeführten Merkmale gelöst.

Unter einem Prekursor versteht man in diesem Zusammenhang einen flüssigen oder gasförmigen Ausgangsstoff (zum Beispiel Tetraethylorthosilikat [TEOS] - SiO₄C₈H₂₀), der durch die Gasphasenreaktion in einen anderen Stoff umgewandelt wird - bei der Lösung nach der DE 101 00 867 A1 wird der Ausgangsstoff selbst chemisch nicht verändert, sondern lediglich mechanisch zerkleinert, d. h. der dort eingesetzte Ausgangsstoff kann nicht als Prekursor bezeichnet werden.

Der Kern der Erfindung besteht somit - mit anderen Worten ausgedrückt - darin, zunächst die schlagartige Temperaturerhöhung im Stoß zu nutzen (neben der schlagartigen Druckerhöhung ein weiteres Charakteristikum eines Stoßes), um eine chemische Reaktion am Prekursor auszulösen. Diese führt zur gewünschten Partikelbildung (und nicht zur von der Druckerhöhung ausgelösten Zerteilung wie bei der DE 101 00 867 A1), wobei die Länge eines sich anschließenden Reaktionsraumes im Wesentlichen die Reaktionsdauer der reagierenden Strömung definiert, d. h. durch die genaue zeitliche Festlegung der Temperaturabsenkung in der vorgenannten vierten Stufe ist erfindungsgemäß eine genaue Einstellung der Eigenschaften (z. B. Größe, Agglomerationsgrad) der erzeugten Partikel möglich. Die Temperaturabsenkung dient somit gewissermaßen zum Einfrieren und damit Beenden der Gasphasenreaktion.

Vorrichtungsmäßig ist die der Erfindung zugrunde liegende Aufgabe dadurch gelöst, dass Mittel zur Zuführung eines Precursors zum auf Überschallgeschwindigkeit zu beschleunigenden Gasstrom und Mittel zum Beenden einer durch den Stoß ausgelösten Gasphasenreaktion am Prekursor vorgesehen sind.

Andere vorteilhafte Weiterbildungen der Erfindung ergeben sich aus den abhängigen Patentansprüchen.

Der Vollständigkeit halber wird noch auf Mayer et al. [Mayer, M., Büttner, H., Ebert, F., Zimmermann, G., Gottfried, H., Michael, G.: Einfluss einer Laval-Düse auf die Partikelbildung im Flammenprozess, Chem. Ing. Tech. 76, 253, 2004 - beigefügt] hingewiesen. Ziel dieser Untersuchung war es, den Einfluss expandierender Düsenströmungen auf die Partikelstruktur bei der Partikelerzeugung im Gasphasenprozess zu klären. Dabei wurde insbesondere festgestellt, dass sich mit expandierender Düsenströmung im Vergleich zu herkömmlichen Reaktionsprodukten (Betrieb mit eingebautem Reduzierstück) kompaktere Partikelstrukturen ergeben, d. h. die Partikel sind nicht mehr in irregulären Ketten angeordnet, sondern es liegen kleinere, dafür dichter gepackte Agglomerate vor. - Die Initiierung des Gasphasenprozesses durch einen Stoß in der Gasströmung ist in diesem Dokument weder offenbart noch angedacht.

Das erfindungsgemäße, kontinuierlich verlaufende Verfahren, die Vorrichtung zur Durchführung des Verfahrens sowie die vorteilhaften Weiterbildungen gemäß der abhängigen Patentansprüche werden nachfolgend anhand der zeichnerischen Darstellung verschiedener Ausführungsbeispiele näher erläutert.

Es zeigt jeweils schematisch
- Figur 1: eine Vorrichtung zur Durchführung des erfindungsgemäßen Verfahrens;
- Figur 2: einen qualitativen Temperaturverlauf des Gasstromes (einschließlich Prekursor) bezogen auf die Wegstrecke X (bzw. Stufen 1, 2, 3 und 4) der Vorrichtung; und
- Figur 3: eine alternative, bevorzugte Ausführungsform der Vorrichtung zur Durchführung des Verfahrens.

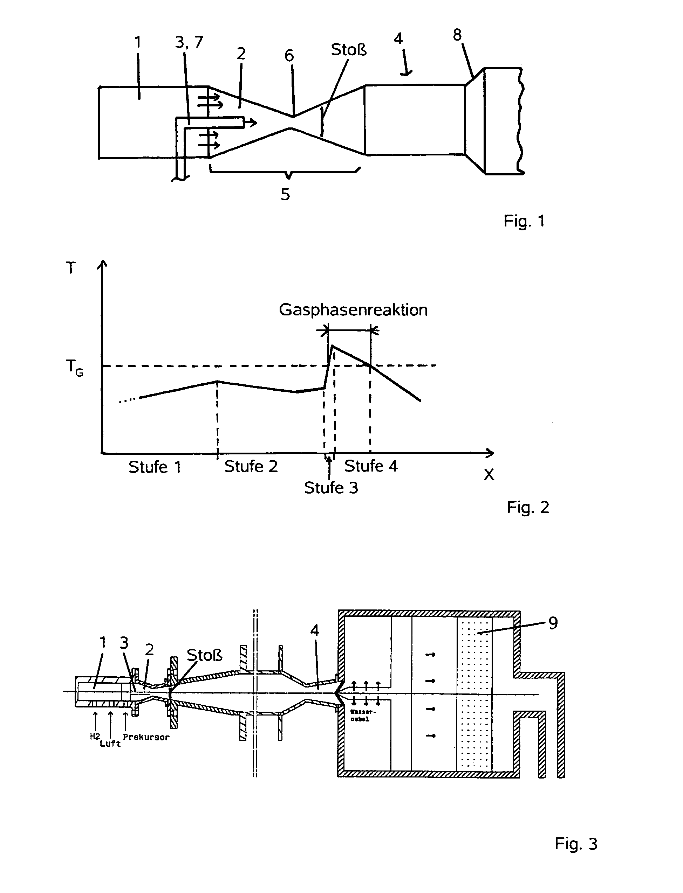

In Figur 1 ist zunächst eine stark abstrahierte Ausführungsform der erfindungsgemäßen Vorrichtung zur Durchführung des Verfahrens dargestellt. Diese umfasst Mittel 1 zur Bereitstellung eines Gasstroms (sogenanntes Treibgas). Dieses Treibgas besteht beispielsweise aus Stickstoff oder anderen Inertgasen, gegebenenfalls Sauerstoff und anderen Komponenten. Dem Treibgas wird die für den Prozess notwendige Gesamtenthalpie zum Beispiel durch eine Vorverbrennung mit Wasserstoff, Methan oder anderen Brenngasen, durch einen Lichtbogen oder mit Hilfe elektrischer Heizelemente zugeführt (mithin mit Hilfe thermischer und/oder elektrischer Heizelemente). Der Brenner beziehungsweise die Heizleistung ist regelbar, zusätzlich wird Luft oder ein inertes Gas zur Regelung des Ruhezustandes und zur Einstellung des gewünschten Massestroms eingeblasen.

Ferner umfasst die Vorrichtung Mittel 2 zur Beschleunigung des Gasstroms auf Überschallgeschwindigkeit und Erzeugung mindestens eines Stoßes bzw. eines Stoßsytems (mehrere Stöße) im auf Überschallgeschwindigkeit beschleunigten Gasstrom; mit anderen Worten ausgedrückt, wird das aufgeheizte Gemisch, bestehend aus Stickstoff oder anderen Inertgasen, gegebenenfalls Verbrennungsprodukten, Sauerstoff und anderen Gasen, durch eine konvergent/divergente Düse (vorzugsweise eine sogenannte Laval-Düse 5 mit einem engsten Querschnitt 6) auf Überschallgeschwindigkeit beschleunigt.

Erfindungsgemäß sind nun Mittel 3 zur Zuführung eines sogenannten Prekursors zum auf Überschallgeschwindigkeit zu beschleunigenden Gasstrom vorgesehen. Die Erzeugung der Nanopartikel erfolgt also durch Zugabe mindestens einer weiteren flüssigen oder gasförmigen Komponente (Prekursor) zum stark aufgeheizten Gasgemisch und kann sowohl durch Reaktion dieser Komponente(n) mit Bestandteilen der Gasmischung miteinander oder durch Pyrolyse des Prekursors/der Prekursoren stattfinden. Die Zugabe des Prekursors/der Prekursoren erfolgt zum Beispiel über eine Zufuhrleitung 7 zentral oder mit Hilfe einer Pylonenanordnung vor, im oder hinter dem engsten Querschnitt 6 der Laval-Düse 5 und/oder durch Einleitung durch Wandöffnungen an der Düsenkontur. Des Weiteren ist eine Ausblasung durch einen in die Überschallströmung gestellten Konus möglich.

Die Initiierung der Prekursor-Zersetzung bzw. -Reaktion erfolgt durch die Temperaturerhöhung, die sich beim Durchströmen des Verdichtungsstoßes (wahlweise senkrecht oder schräg) einstellt. Vor dem Stoß sind Temperatur und Druck des Prekursor-Gasgemisches in Abhängigkeit von der Reaktionskinetik so eingestellt, dass noch keine Umsetzung erfolgt. Die Initiierung der Reaktion erfolgt durch die schnelle Temperaturerhöhung der Gasphasenströmung über den Stoß (Stoßaufheizung). Ein schräger Verdichtungsstoß wird durch Strömungsumlenkung oder einen zentralen Konus eingestellt, ein senkrechter Verdichtungsstoß durch überexpandierten Betrieb der Düse und/oder Verwendung eines Stoßgenerators bei entsprechenden Druckverhältnissen für die Düsenströmung.

Im Anschluss an das Stoßsystem sind Mittel 4 zum Beenden der durch den Stoß am Prekursor ausgelösten Gasphasenreaktion vorgesehen, wobei insbesondere die Länge eines sich anschließenden Reaktionsraumes die Reaktionsdauer der reagierenden Strömung definiert. Unter der reagierenden Strömung wird dabei die Gasströmung verstanden, in der die Prekursor-Zersetzung, die Primärreaktion zur Partikelbildung und der nachfolgende Prozess des Partikelwachstums und gegebenenfalls Partikelaggregation stattfinden. Durch Veränderung der Verweilzeit zwischen der Stelle der Initiierung der Reaktion und dem Ort des Einfrierens der Reaktion durch die weiter unten genannten Verfahren können die Partikeleigenschaften bezüglich mittlerer Primärpartikelgröße und Agglomerationsgrade definiert eingestellt werden. Die Verweilzeit kann im Wesentlichen durch die Länge des Reaktionsraumes und die dort vorherrschende Strömungsgeschwindigkeit variiert werden. Die infolge geeigneter Maßnahmen zur Führung und Kontrolle der Strömung erreichten zeitlich konstanten und homogenen Initiierungs- und Löschbedingungen führen zu weitgehend monodispersen Partikeln.

Als Mittel 4 zum Beenden einer durch den Stoß am Prekursor ausgelösten Gasphasenreaktion ist zum Beispiel (siehe Figur 1) eine Expansionsdüse 8 vorgesehen, d. h. die Temperaturabsenkung in der vierten Stufe wird durch eine Expansion des Gasstroms bewirkt. Mit anderen Worten ausgedrückt, wird die reagierende Über- oder Unterschallströmung stromab von der Stelle der Initiierung der Reaktion z. B. durch eine zweite Düsenanordnung so expandiert, dass die Reaktion durch die resultierende schnelle Absenkung der Temperatur innerhalb eines möglichst kurzen Zeitraums eingefroren wird. Diese rasche Temperaturabsenkung kann ebenfalls innerhalb einer Prandtl-Meyer Expansion, hervorgerufen durch eine unstetige Änderung des Wandneigungswinkels, erfolgen.

Alternativ kann aber auch an der vierten Stufe mindestens eine Zufuhrleitung zur Zufuhr eines zusätzlichen Mediums zum Gasstrom angeordnet sein, d. h. die Temperaturabsenkung in der vierten Stufe wird durch Zuführung eines zusätzlichen Mediums zum Gasstrom bewirkt, wobei vorzugsweise ein flüssiges Medium, wie Wasser, verwendet wird. In diesem Fall ist die in Figur 3 dargestellte, zweite Düsenanordnung nicht erforderlich.

Zur Reduktion der Gesamtströmungsenthalpie können darüber hinaus Wasser, flüssiger Stickstoff oder andere Kühlmedien in die partikelbeladene Strömung eingeblasen werden, was über eine oder mehrere Zuführungen oder über Wandöffnungen erfolgt. Zur Erhöhung der Zerstäubungseffizienz von Flüssigkeiten können diese mit Gasen, zum Beispiel Kohlendioxid, bis zu ihrer Sättigungsgrenze angereichert werden. Die Zusammensetzung des Kühlmediums kann so beschaffen sein, dass eine physikalische oder chemische Bindung von Bestandteilen des Kühlmediums mit der Partikeloberfläche erreicht wird, und zwar zum Beispiel zur Verbesserung oder Einstellung von Produkteigenschaften wie Fließverhalten oder Redispergierbarkeit. Diese Zusatzstoffe können auch in der zweiten Düse der Strömung beigemischt werden.

Die Abscheidung der Partikel erfolgt am Ende der Vorrichtung durch einen Filter 9 (siehe Figur 3) oder einen Waschvorgang, wobei am Austritt des Filters 9 zum Beispiel mittels einer Wasserring-Vakuumpumpe Umgebungs- oder Unterdruck eingestellt wird.

Kurz zusammengefasst ist erfindungsgemäß somit ein Verfahren zur Partikelerzeugung vorgesehen
- bei dem in einer ersten Stufe ein Gasstrom bereitgestellt wird,
- bei dem in einer in Strömungsrichtung gesehen nachfolgenden zweiten Stufe der Gasstrom von Unterschall- auf Überschallgeschwindigkeit beschleunigt wird,
- bei dem dem Gasstrom spätestens in der zweiten Stufe mindestens ein Prekursor zugeführt wird,
- bei dem in einer in Strömungsrichtung gesehen nachfolgenden dritten Stufe der Gasstrom durch mindestens einen Stoß bzw. ein Stoßsystem (mehrere Stöße) abgebremst wird,
- bei dem eine durch den Stoß in der dritten Stufe induzierte Temperaturerhöhung eine Gasphasenreaktion am Prekursor auslöst, und
- bei dem in einer in Strömungsrichtung gesehen nachfolgenden vierten Stufe die Gasphasenreaktion durch eine Temperaturabsenkung beendet wird.

In Figur 2 ist ein Temperaturdiagramm dargestellt, aus dem sich ergibt, dass die Temperatur der Gasströmung (einschließlich des Prekursors) durch den Stoß (zur Veranschaulichung in X-Richtung übertrieben breit dargestellt) auf eine die Gasphasenreaktion auslösende Temperatur T_{G} (Temperatur zum Beginn der Gasphasenreaktion) erhöht wird. Zum Einfrieren der Reaktion kommt es (im Prinzip), sobald diese Temperatur T_{G} wieder unterschritten wird, d. h. der gekennzeichnete Bereich markiert die Dauer der Gasphasenreaktion.

Durch die Einstellung eines schrägen Verdichtungsstoßes ist es schließlich möglich, die Strömung hinter dem schrägen Stoß auf Überschallgeschwindigkeit zu halten, wodurch letztlich das Reaktionsgebiet räumlich stark auseinander gezogen wird. Dies wiederum führt stromab vom schrägen Stoß in Abhängigkeit räumlich genau definierter Positionen zu unterschiedlichen Zwischenprodukten, die sich in erster Linie in ihrer Oxidationsstufe unterscheiden. Mit einer geeigneten Trennvorrichtung können auf diese Weise gleichzeitig unterschiedliche Partikel erzeugt werden, die der Vorrichtung getrennt entnehmbar sind.

### Bezugszeichenliste

- 1: Mittel zur Bereitstellung eines Gasstromes
- 2: Mittel zur Beschleunigung des Gasstroms auf Überschallgeschwindigkeit und Erzeugung eines Stoßes im auf Überschallgeschwindigkeit beschleunigten Gasstrom
- 3: Mittel zur Zuführung eines Prekursors zum auf Überschallgeschwindigkeit zu beschleunigenden Gasstrom
- 4: Mittel zum Beenden einer durch den Stoß am Prekursor ausgelösten Gasphasenreaktion
- 5: Laval-Düse
- 6: engster Querschnitt
- 7: Zuführleitung
- 8: Expansionsdüse
- 9: Filter

## Patentansprüche

1. Verfahren zur Partikelerzeugung,
a) bei dem in einer ersten Stufe ein Gasstrom bereitgestellt wird,
b) bei dem in einer in Strömungsrichtung gesehen nachfolgenden zweiten Stufe der Gasstrom von Unterschall- auf Überschallgeschwindigkeit beschleunigt wird,
c) bei dem dem Gasstrom spätestens in der zweiten Stufe mindestens ein Prekursor zugeführt wird,
d) bei dem in einer in Strömungsrichtung gesehen nachfolgenden dritten Stufe der Gasstrom durch mindestens einen Stoß abgebremst wird,
e) bei dem eine durch den Stoß in der dritten Stufe induzierte Temperaturerhöhung eine Gasphasenreaktion am Prekursor auslöst, und
f) bei dem in einer in Strömungsrichtung gesehen nachfolgenden vierten Stufe die Gasphasenreaktion durch eine Temperaturabsenkung beendet wird.

2. Verfahren nach Anspruch 1,
**dadurch gekennzeichnet,**
**dass** die Temperaturabsenkung in der vierten Stufe durch eine Expansion des Gasstroms bewirkt wird.

3. Verfahren nach Anspruch 1,
**dadurch gekennzeichnet,**
**dass** die Temperaturabsenkung in der vierten Stufe durch Zuführung eines zusätzlichen Mediums zum Gasstrom bewirkt wird.

4. Verfahren nach Anspruch 3,
**dadurch gekennzeichnet,**
**dass** ein flüssiges Medium, vorzugsweise Wasser, verwendet wird.

5. Verfahren nach einem der Ansprüche 1 bis 4,
**dadurch gekennzeichnet,**
**dass** zur Erzeugung unterschiedlicher Partikel der Stoß wahlweise als senkrechter oder schräger Stoß eingestellt wird.

6. Vorrichtung zur Durchführung des Verfahrens nach Anspruch 1, umfassend Mittel (1) zur Bereitstellung eines Gasstroms und Mittel (2) zur Beschleunigung des Gasstroms auf Überschallgeschwindigkeit und Erzeugung mindestens eines Stoßes im auf Überschallgeschwindigkeit beschleunigten Gasstrom,
**dadurch gekennzeichnet,**
**dass** Mittel (3) zur Zuführung eines Prekursors zum auf Überschallgeschwindigkeit zu beschleunigenden Gasstrom und Mittel (4) zum Beenden einer durch den Stoß am Prekursor ausgelösten Gasphasenreaktion vorgesehen sind.

7. Vorrichtung nach Anspruch 6,
**dadurch gekennzeichnet,**
**dass** die Mittel (2) zur Beschleunigung des Gasstromes auf Überschallgeschwindigkeit und Erzeugung eines Stoßes im auf Überschallgeschwindigkeit beschleunigten Gasstrom eine Laval-Düse (5) mit einem engsten Querschnitt (6) umfassen.

8. Vorrichtung nach Anspruch 6 oder 7,
**dadurch gekennzeichnet,**
**dass** die Mittel (3) zur Zuführung eines Prekursors zum auf Überschallgeschwindigkeit zu beschleunigenden Gasstrom mindestens eine Zufuhrleitung (7) umfassen, die wahlweise vor, im oder nach dem engsten Querschnitt (6) in der Laval-Düse (5) ausmündet.

9. Vorrichtung nach einem der Ansprüche 6 bis 8,
**dadurch gekennzeichnet,**
**dass** die Mittel (4) zum Beenden einer durch den Stoß am Prekursor ausgelösten Gasphasenreaktion eine Expansionsdüse (8) umfassen.

10. Vorrichtung nach einem der Ansprüche 6 bis 8,
**dadurch gekennzeichnet,**
**dass** die Mittel (4) zum Beenden einer durch den Stoß am Prekursor ausgelösten Gasphasenreaktion mindestens eine Zufuhrleitung (9) zur Zufuhr eines zusätzlichen Mediums zum Gasstrom umfassen.

11. Vorrichtung nach einem der Ansprüche 6 bis 10,
**dadurch gekennzeichnet,**
**dass** die Mittel (1) zur Bereitstellung eines Gasstromes wahlweise thermische oder elektrische Heizelemente zur Erhöhung der Gesamtenthalpie des Gasstromes umfassen.
